# EUROPEAN PATENT SPECIFICATION

(11) **EP 3 670 209 B1**
(45) Date of publication and mention of the grant of the patent: **10.11.2021**
(21) Application number: 19218332.5
(22) Date of filing: 19.12.2019
(51) Int. Cl.: B60C 11/04, B60C 11/12, B60C 11/03

(54) **TREAD FOR A PNEUMATIC TIRE**
LAUFFLÄCHE FÜR EINEN LUFTREIFEN
BANDE DE ROULEMENT POUR PNEU DE VÉHICULE

(30) Priority: 20.12.2018 US 201816227157
(43) Date of publication of application: 24.06.2020
(73) Proprietor: The Goodyear Tire & Rubber Company, Akron, OH 44316 (US)
(72) Inventor: PHILIPOT, Benjamin, F-57330 Hettange Grande (FR); LEYSSENS, Jan, B-6860 Leglise-Beheme (BE); MOIA, Robin, F-57070 Metz (FR); CRETON, Roel, L-8835 Folschette (LU)
(74) Representative: Kutsch, Bernd

(56) References cited:
- EP-A1- 3 037 282
- EP-A1- 3 260 308
- JP-A- H09 315 110

## Description

### Field of Invention

The present invention relates to a tire, preferably an all-season pneumatic tire, with an improved tread, and more particularly, relates to a pneumatic tire tread having improved stiffness and more uniform footprint pressure distribution.

### Background of the Invention

Conventionally, in addition to circumferential main grooves and lateral grooves, tire treads may have sipes on a tread surface in order to demonstrate favorable functional characteristics (e.g., low rolling resistance, good traction, good durability, etc.). An object of the tire is to reduce hydroplaning and improve winter performance without reducing dry performance. The tread of the conventional tire may be equipped with a center block column extending in the tire circumferential direction and block columns arranged in a shoulder portion and separated from the center block column by two circumferential grooves. The tread may thereby guide water from a center circumferential flat plane to both sides by providing grooved blocks of the center block column. The grooved blocks may be made up of two groove portions that are separated from each other by an inclined groove and intersect in the center circumferential flat plane by forming an angle with the inclined groove. Moreover, the tread may discharge snow by providing circumferential grooves that extend at an acute angle with respect to the tire equatorial plane (tire circumferential flat plane).

The conventional tire may further include grooves connecting to the adjacent inclined grooves in the tire circumferential direction (tire rolling direction). These connecting groove may become narrower to equalize the size of the blocks of the center block column. Although making the grooves narrower may be effective with respect to snow-covered road surfaces, steering stability on dry road surfaces may be impacted since the stiffness of the blocks is also altered. Additionally, water discharge performance may be reduced and steering stability on wet road surfaces may be reduced since the grooves that connect with the inclined grooves are inclined in the direction opposite the inclined grooves and thus work against the action of the inclined grooves to guide water from the center circumferential flat plane to both sides and thus detrimentally return the water to the center circumferential flat plane side.

EP 3 037 282 A1 describes a tire tread in accordance with the preamble of claim 1.

Further tire treads with five ribs and four circumferential grooves wherein the ribes include lateral grooves or sipes are disclosed in EP 3 260 308 A1 and JP H09 315 110 A.

### Definitions

The following definitions are controlling for the disclosed invention.

"Asymmetric tread" means a tread that has a tread pattern not symmetrical about the center plane or equatorial plane EP of the tire.

"Axial" and "Axially" means the lines or directions that are parallel to the axis of rotation of the tire.

"Axially inward" means in an axial direction toward the equatorial plane.

"Axially outward" means in an axial direction away from the equatorial plane.

"Circumferential" means circular lines or directions extending along the perimeter of the surface of the annular tread perpendicular to the axial direction.

"Equatorial plane" means the plane perpendicular to the tire's axis of rotation and passing through the center of its tread or the plane containing the circumferential centerline of the tread.

"Footprint" means the contact patch or area of contact of the tire tread with a flat surface under normal load pressure and speed conditions.

"Groove" means an elongated void area in a tread that may extend circumferentially or laterally about the tread in a straight, curved, or zigzag manner. Circumferentially and laterally extending grooves sometimes have common portions. The "groove width" may be the tread surface occupied by a groove or groove portion divided by the length of such groove or groove portion; thus, the groove width may be its average width over its length. Grooves may be of varying depths in a tire. The depth of a groove may vary around the circumference of the tread, or the depth of one groove may be constant but vary from the depth of another groove in the tire. If such narrow or wide grooves are of substantially reduced depth as compared to wide circumferential grooves, which they interconnect, they may be regarded as forming "tie bars" tending to maintain a rib-like character in the tread region involved. As used herein, a groove is intended to have a width large enough to remain open in the tires contact patch or footprint.

"Inboard side" means the side of the tire nearest the vehicle when the tire is mounted on a wheel and the wheel is mounted on the vehicle.

"Lateral" means a direction going from one sidewall of the tire towards the other sidewall of the tire. A "lateral" extending groove or sipe is a preferably primarily or substantially laterally extending groove or sipe although not necessarily extending in parallel to the axial direction.

"Non-directional tread" means a tread that has no preferred direction of forward travel and is not required to be positioned on a vehicle in a specific wheel position or positions to ensure that the tread pattern is aligned with the preferred direction of travel. Conversely, a directional tread pattern has a preferred direction of travel requiring specific wheel positioning.

"Radial" and "radially" mean directions radially toward or away from the axis of rotation of the tire.

"Rib" means a circumferentially extending strip of rubber on the tread which is defined by at least one circumferential groove and either a second such groove or a lateral edge.

"Sipe" means a groove having a width in the range of 0.2 percent to 0.8 percent of the tread width or a width in a range of from 0.4 to 1.6 mm. Sipes are typically formed by steel blades having a 0.4 to 1.6 mm, inserted into a cast or machined mold.

"Tread" means the ground contacting portion of a tire.

"Tread width" (TW) means the greatest axial distance across the tread, when measured (using a footprint of a tire,) laterally from shoulder to shoulder edge, when mounted on the design rim and subjected to a specified load and when inflated to a specified inflation pressure for said load.

### Summary of the Invention

The invention relates to a tread for a tire in accordance with claim 1 and to a tire in accordance with claim 15.

Preferably, the tread is a tread for a passenger tire, more preferably an all-season passenger tire.

Dependent claims refer to preferred embodiments of the invention.

A tread for a tire in accordance with a preferred embodiment the present invention includes a first circumferential groove extending in a circumferential direction of the tire; a second circumferential groove extending in the circumferential direction of the tire; a third circumferential groove extending in the circumferential direction of the tire; and a fourth circumferential groove extending in the circumferential direction of the tire, the first, second, third, and fourth circumferential grooves defining first, second, third, fourth, and fifth ribs. The second and fourth ribs include lateral grooves and lateral sipes, each extending in a first angled direction relative to the first circumferential groove across the tire tread. Two lateral sipes are disposed circumferentially between each adjacent pair of lateral grooves. One of the two lateral sipes extends in a first axial direction and has a first width transitioning in the first axial direction to a second wider width adjacent a lateral mid-point of the second and fourth ribs. The other of the two lateral sipes extends in a second axial direction and has a first width transitioning in the second axial direction to a second wider width adjacent a lateral mid-point of the second and fourth ribs. The first axial direction is opposite the second axial direction.

According to a preferred aspect of the tread in accordance with the invention, the third rib includes lateral grooves and lateral sipes each extending in a second angled direction relative to the third circumferential groove across the tire tread. Two lateral sipes are disposed circumferentially between each pair of adjacent lateral grooves. One of the two lateral sipes extends in the first axial direction and has a first width transitioning in the first axial direction to a second wider width adjacent a lateral mid-point of the third rib. The other of the two lateral sipes extends in the second axial direction and has a first width transitioning in the second axial direction to a second wider width adjacent a lateral mid-point of the third rib. The first angled direction is equal and opposite the second angled direction.

According to one aspect of the tread in accordance with the invention, the first rib includes a secondary groove circumferentially extending completely around the first rib.

According to a preferred aspect of the tread in accordance with the invention, the first rib includes a tertiary groove circumferentially extending completely around the first rib.

According to a preferred aspect of the tread in accordance with the invention, the lateral grooves have a radial depth between 1.0 mm and 4.0 mm.

According to a preferred aspect of the tread in accordance with the invention, the lateral sipes have a radial depth between 1.0 mm and 3.0 mm.

According to a preferred aspect of the tread in accordance with the invention, the fifth shoulder includes one end blind sipes having a radial depth between 1.0 mm and 3.0 mm.

According to a preferred aspect of the tread in accordance with the invention, the first rib includes lateral grooves extending at a first angle relative to the first circumferential groove across the tread.

According to a preferred aspect of the tread in accordance with the invention, the first rib includes two sipes disposed circumferentially between each pair of lateral grooves, the two sipes extending at the first angle relative to the first circumferential groove across the tread.

According to a preferred aspect of the tread in accordance with the invention, the two sipes have a radial depth between 1.0 mm and 3.0 mm

### Brief Description of the Drawings

The present invention will be more clearly understood by the following description of some examples thereof, with reference to the accompanying drawings, in which:

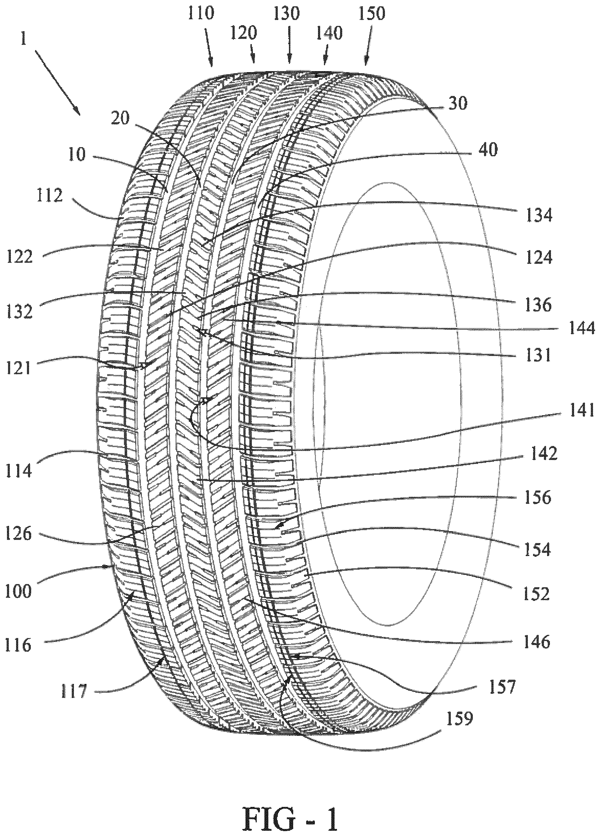

FIG. 1 is a schematic perspective view of an example tire in accordance with the present invention.
FIG. 2 is a schematic plan view of the tire illustrated in FIG. 1.
FIG. 3 is a schematic enlarged plan view of the tire illustrated in FIG. 1.

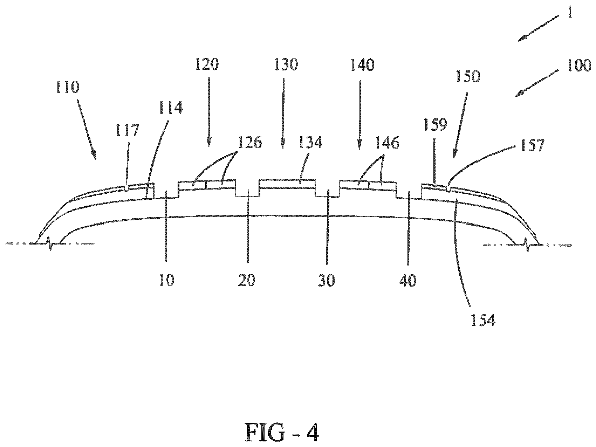

FIG. 4 is a schematic sectional view taken along line "4-4" in FIG. 3.

### Description of Example Embodiments of the Present Invention

A tire 1 in accordance with an embodiment of the present invention includes a tread 100 with a first main circumferential groove 10, a second main circumferential groove 20, a third main circumferential groove 30, and a fourth main circumferential groove 40 all extending in a circumferential direction C of the tire forming the tread 100. Five land portions, or ribs 110, 120, 130, 140, 150 are formed by these main circumferential grooves 10, 20, 30, 40.

Each of the ribs 110, 120, 130, 140, 150 has additional grooves and sipes extending laterally L and/or circumferentially C across the ribs 110, 120, 130, 140, 150 forming discreet and circumferentially repeating blocks, or tread elements 112, 122, 132, 142, 152.

The main circumferential grooves 10, 20, 30, 40 preferably have a lateral width in a range of from 3.0 mm to 30.0 mm, more preferably 3.0 mm to 20 mm, and/or have a radial depth in a range of from 5.0 mm to 13.0 mm, more preferably 6.0 to 9.0 mm. The tire 1 may be pneumatic or non-pneumatic.

The first shoulder rib 110 has alternating lateral grooves 114 and one end blind sipes 116 extending axially and at a slight angle, preferably at an angle in a range of from 2 to 10 degree, with respect to the axial direction L from the first main circumferential groove 10 axially toward the outer edge of the tread 100.

The lateral grooves 114 preferably have a radial depth in a range of from 1.0 mm to 4.0 mm and the one end blind sipes 116 preferably have a radial depth in a range of from 1.0 mm to 3.0 mm.

The bottom of the lateral grooves 114 may have humps or approximately 2.0 mm steps (not shown).

The first shoulder rib 114 preferably includes a secondary groove 117 circumferentially extending completely around the tire 1. The secondary groove 117 preferably has a radial depth in a range of from 2.0 mm to 4.0 mm.

The second shoulder rib 150 has alternating lateral grooves 154 and one end blind sipes 156 extending axially and at a slight angle, preferably at an angle in a range of from 2 to 10 degree, with respect to the axial direction L, from the fourth main circumferential groove 50 axially toward the outer edge of the tread 100.

The lateral grooves 154 preferably have a radial depth in a range of from 1.0 mm to 4.0 mm and the one end blind sipes 156 preferably have a radial depth in a range of from 1.0 mm to 3.0 mm.

The bottom of the lateral grooves 154 may have humps or approximately 2.0 mm steps (not shown).

The second shoulder rib 150 preferably includes a secondary groove 157 circumferentially extending completely around the tire 1.

The secondary groove 157 preferably has a radial depth in a range of from 2.0 mm to 4.0 mm.

The second shoulder rib 150 preferably further has a tertiary groove 159 circumferentially extending completely around the tire 1.

Preferably, the tertiary groove 159 has a width less than a width of the secondary groove 157, such as 50% or in a range of from 30 to 70% of the width of the secondary groove 157.

The tertiary groove 159 preferably has a radial depth in a range of from 2.0 mm to 4.0 mm.

The three center main circumferential ribs 120, 130, 140 have alternating angled grooves 124, 134, 144 and angled sipes 126, 136, 146 extending circumferentially across, preferably fully across, the ribs 120, 130, 140 between the corresponding main circumferential grooves 10, 20, 30, 40.

The lateral grooves 124, 134, 144 preferably have a radial depth in a range of from 1.0 mm to 4.0 mm.

The one end blind sipes 126, 136, 146 preferably have a radial depth in a range of from 1.0 mm to 3.0 mm.

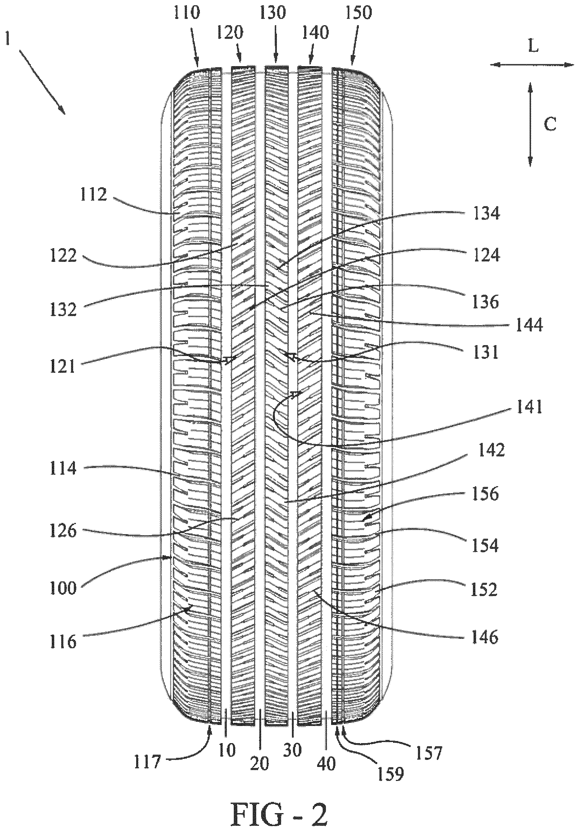

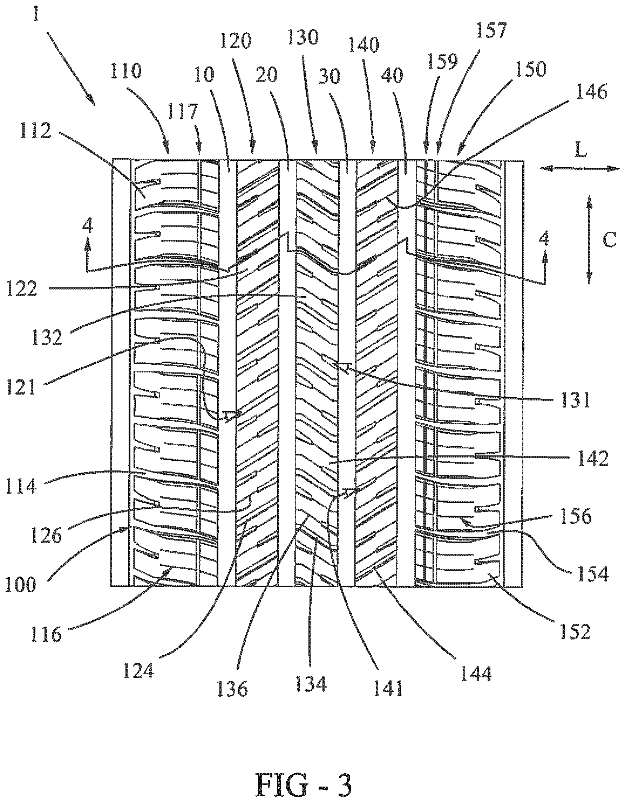

As shown in FIGS. 2 and 3, the grooves 124, 144 and sipes 126, 146 of the outer ribs 120, 140 preferably extend at equal angles while the grooves 134 and sipes 136 of the center rib 130 preferably extend at an equal, but opposite, angle compared to the angle of the grooves 124, 144 and sipes 126, 146 of the outer ribs 120, 140.

The grooves 124, 144 and the sipes 126, 146 of the outer ribs 120, 140 preferably extend at an angle in a range of from 30 to 50 degree such as 40 degree or 45 degree with respect to the axial direction L.

The lateral grooves 124 of the first intermediate rib 120 extend at a first angle 121 relative to the first circumferential groove 10 across the tire tread 100. Two of the lateral sipes 126 are be disposed circumferentially between each pair of lateral grooves 124. One of the two lateral sipes 126 extend in a first axial direction and have a first width transitioning in the first axial direction to a second wider width adjacent a lateral mid-point of the first intermediate rib 120. The other of the two lateral sipes 126 extends in a second axial direction and have a first width transitioning in the second axial direction to a second narrower width adjacent a lateral mid-point of the first intermediate rib 120.

"Adjacent a lateral mid-point" means here that the transition is at the lateral mid-point of the first intermediate rib 120 or up to 15 percent, preferably up to 10 percent, of the axial width of the first intermediate rib 120 laterally distant from the lateral mid-point of the first intermediate rib 120.

The first axial direction is be opposite the second axial direction (FIG. 3). The bottom of the angled sipes 126 may have humps or approximately 2.0 mm steps (not shown). The angled sipes 126 preferably have a radial depth in a range of from 1.0 mm to 4.0 mm.

The lateral grooves 134 of the center rib 130 extend at a second angle 131 relative to the third circumferential groove 30 across the tire tread 100. Two of the lateral sipes 136 are disposed circumferentially between each pair of lateral grooves 134. One of the two lateral sipes 136 extends in a first axial direction and has a first width transitioning in the first axial direction to a second wider width adjacent a lateral mid-point of the center rib 130. The other of the two lateral sipes 136 extends in a second axial direction and has a first width transitioning in the second axial direction to a second narrower width adjacent a lateral mid-point of the center rib 130.

"Adjacent a lateral mid-point" means here again that the transition is at the lateral mid-point of the center rib 130 or up to 15 percent, preferably up to 10 percent, of the axial width of the center rib 130 laterally distant from the lateral mid-point of the center rib 120.

The first axial direction is opposite the second axial direction (FIG. 3). The bottom of the angled sipes 136 may have humps or approximately 2.0 mm steps (not shown). The angled sipes 136 preferably have a radial depth in a range of from 1.0 mm to 4.0 mm.

The lateral grooves 144 of the second intermediate rib 140 extend at a third angle 141 relative to the third circumferential groove 30 across the tire tread 100. Two of the lateral sipes 146 are disposed circumferentially between each pair of lateral grooves 134. One of the two lateral sipes 146 extends in a first axial direction and has a first width transitioning in the first axial direction to a second wider width adjacent a lateral mid-point of the second intermediate rib 140. The other of the two lateral sipes 146 extends in a second axial direction and has a first width transitioning in the second axial direction to a second narrower width adjacent a lateral mid-point of the second intermediate rib 140.

"Adjacent a lateral mid-point" means here that the transition is at the lateral mid-point of the second intermediate rib 140 or up to 15 percent, preferably up to 10 percent, of the axial width of the second intermediate rib 140 laterally distant from the lateral mid-point of the second intermediate rib 140.

The first axial direction is opposite the second axial direction (FIG. 3). The bottom of the angled sipes 146 may have humps or approximately 2.0 mm steps (not shown). The angled sipes 146 preferably have a radial depth in a range of from 1.0 mm to 4.0 mm.

As shown in FIG. 3, the first angle 121 is preferably equal to the third angle 141.

The second angle 131 is preferably equal and opposite the first angle 121 and/or the third angle 141.

The grooves 134 and the sipes 136 of the central or third rib 130 preferably extend at an angle in a range of from 30 to 50 degree such as 40 degree or 45 degree with respect to the axial direction L.

The second wider width in the second and fourth rib 120, 140 is preferably at least two times wider than the first width in the second and fourth rib 120, 140.

The second wider width in the third rib 130 is preferably at least two times wider than the first width in the third rib 130.

The axial width of the second, third and fourth rib 120, 130, 140 is preferably equal. Alternatively, the axial width of the second and fourth rib may be in a range of from 100% to 130% of the axial width of the third (central) rib 130.

The axial width of the first and fifth rib 110, 150 is preferably equal.

The axial width of the first and/or fifth rib 110, 150 is preferably in a range of from 150 to 250 percent or 180 to 220 percent of the axial width of the third (center) rib 130.

The tread is preferably asymmetric. Preferably, the fifth rib has the tertiary groove 159 as described above whereas the first rib 110 does not have such tertiary groove. Other than the missing tertiary groove 159 in the first rib, the tread pattern in the first and fifth rib 110, 150 is preferably the same but with an inclination, if any, of the sipes and grooves in the first rib 110 being under an opposite angle than the inclination, if any, of the sipes and grooves in the fifth rib 150.

Preferably, the fifth rib 150 is on the axially outer side (or on the outboard side) of the tire when the tire is mounted on a vehicle.

The above described tire 1 and tread 100 may be utilized for all-season electric vehicles because of the tread's heavy load and high torque performance characteristics while maintaining acceptable rolling resistance and comfort performance. The design of the three middle ribs 120, 130, 140 may advantageously increase longitudinal stiffness of the tread 100 by as much as +10 percent. The asymmetric design may increase lateral grip by up to +3 percent. The shoulder sipes 116, 156 also increase lateral grip by as much as +5 percent. Sipe density and radial depth may be adjusted for optimum snow and dry handling performances. These factors result in a tread design that may improve snow, dry, and wet handling performances.

## Claims

1. A tread for a tire (1), the tread (100) comprising:
a first circumferential groove (10) extending in a circumferential direction (C) of the tire (1), when the tread (100) is applied on a tire (1);
a second circumferential groove (20) extending in the circumferential direction (C) of the tire (1), when the tread (100) is applied on a tire (1);
a third circumferential groove (30) extending in the circumferential direction (C) of the tire (1), when the tread (100) is applied on a tire (1); and
a fourth circumferential groove (40) extending in the circumferential direction (C) of the tire (1), when the tread (100) is applied on a tire (1), the first, second, third, and fourth circumferential grooves (10, 20, 30, 40) defining first, second, third, fourth, and fifth ribs (110, 120, 130, 140, 150);
the second and fourth ribs (120, 140) including lateral grooves (124, 144) and lateral sipes (126, 146), the lateral grooves (124, 144) and the lateral sipes (126, 146) each extending in a first angled direction relative to the axial direction (L) of the tire (1) when the tread (100) is applied on a tire (1) and preferably each extending fully across the respective rib (120, 140), wherein two of said lateral sipes (126, 146) are disposed circumferentially between each pair of lateral grooves (124, 144), one of the two lateral sipes (126, 146) extending in a first direction and, when moving along the first direction, having a first width transitioning to a second wider width at or adjacent to a lateral mid-point of the respective second and fourth rib (120, 140), the other of the two lateral sipes (126, 146) extending in a second direction and, when moving along the second direction, having a first width transitioning to a second wider width at or adjacent to a lateral mid-point of the respective second and fourth rib (120, 140), the first direction being oriented opposite the second direction; **characterized in that** the first rib (110) includes a secondary groove (117) circumferentially extending completely around the first rib (110) and/or **in that** the fifth rib (150) includes a secondary groove (157) circumferentially extending completely around the fifth rib (150).

2. The tread as set forth in claim 1 wherein the third rib (130) including lateral grooves (134) and lateral sipes (136), the lateral grooves (134) and the lateral sipes (136) each extending in a second angled direction relative to the axial direction (L) of the tire (1) when the tread (100) is applied on a tire (1) and preferably each extending fully across the third rib (130), wherein two of said lateral sipes (136) are disposed circumferentially between each pair of lateral grooves (134), one of the two lateral sipes (136) extending in the first direction and, when moving along the first direction, having a first width transitioning to a second wider width at or adjacent to a lateral mid-point of the third rib (130), the other of the two lateral sipes (136) extending in the second direction and, when moving along the second direction, having a first width transitioning to a second wider width at or adjacent to a lateral mid-point of the third rib (130), the first direction being equal and opposite the second direction.

3. The tread as set forth in claim 1 wherein the fifth rib (150) includes a tertiary groove (159) circumferentially extending completely around the fifth rib (150).

4. The tread as set forth in claim 1 wherein the first rib (110) comprises no groove extending circumferentially completely around the first rib (110) other than said secondary groove (117).

5. The tread as set forth in at least one of the previous claims wherein the first and fifth rib (110, 150) are shoulder ribs, the third rib (130) is a central rib and the second and fourth ribs (120, 140) are intermediate ribs located between the shoulder ribs and the central rib.

6. The tread as set forth in at least one of the previous claims wherein the lateral grooves (124, 144) in the second and/or the fourth rib (120, 140) have a radial depth in a range of from 1.0 mm to 4.0 mm.

7. The tread as set forth in at least one of the previous claims wherein the lateral grooves (134) in the third rib (130) have a radial depth in a range of from 1.0 mm to 4.0 mm.

8. The tread as set forth in at least one of the previous claims wherein the lateral sipes (126, 146) in the second and/or the fourth rib (120, 140) have a radial depth in a range of from 1.0 mm to 3.0 mm.

9. The tread as set forth in at least one of the previous claims wherein the lateral sipes (136) in the third rib (130) have a radial depth in a range of from 1.0 mm to 3.0 mm.

10. The tread as set forth in at least one of the previous claims wherein the fifth rib (150) and/or the first rib (110) includes at least one, preferably two, one end blind sipes (116, 156) having a radial depth preferably in a range of from 1.0 mm to 3.0 mm.

11. The tread as set forth in at least one of the previous claims wherein the first rib (110) and/or the fifth rib (150) includes lateral grooves (114, 154) extending at a first angle relative to the axial direction (L) of the tire (1) when the tread (100) is applied on a tire (1) and extending preferably fully across the respective first or fifth rib (110, 150).

12. The tread as set forth in claim 11 wherein the first rib (110) and/or the fifth rib (150) includes two sipes (116, 156) disposed circumferentially between each pair of lateral grooves (114, 154), said two sipes (116, 156) preferably extending at said first angle relative to the axial direction (L) of the tire (1) when the tread (100) is applied on a tire (1).

13. The tread as set forth in claim 12 wherein the said two sipes (116, 156) are have a radial depth in a range of from 1.0 mm to 3.0 mm and/or are one end blind sipes.

14. The tread as set forth in at least one of the previous claims wherein the second wider width in the second and fourth rib (120, 140) is at least two times wider than the first width in the second and fourth rib (120, 140), and/or wherein the second wider width in the third rib (130) is at least two times wider than the first width in the third rib (130).

15. A tire having a tread in accordance with at least one of the previous claims.

## Patentansprüche

1. Lauffläche für einen Reifen (1), wobei die Lauffläche (100) Folgendes umfasst:
eine erste Umfangsrille (10), die sich in einer Umfangsrichtung (C) des Reifens (1) erstreckt, wenn die Lauffläche (100) auf einen Reifen (1) aufgebracht ist;
eine zweite Umfangsrille (20), die sich in der Umfangsrichtung (C) des Reifens (1) erstreckt, wenn die Lauffläche (100) auf einen Reifen (1) aufgebracht ist;
eine dritte Umfangsrille (30), die sich in der Umfangsrichtung (C) des Reifens (1) erstreckt, wenn die Lauffläche (100) auf einen Reifen (1) aufgebracht ist; und
eine vierte Umfangsrille (40), die sich in der Umfangsrichtung (C) des Reifens (1) erstreckt, wenn die Lauffläche (100) auf einen Reifen (1) aufgebracht ist, wobei die erste, die zweite, die dritte und die vierte Umfangsrille (10, 20, 30, 40) eine erste, eine zweite, eine dritte, eine vierte und eine fünfte Rippe (110, 120, 130, 140, 150) definieren;
wobei die zweite und die vierte Rippe (120, 140) seitliche Rillen (124, 144) und seitliche Lamellen (126, 146) beinhalten, wobei sich die seitlichen Rillen (124, 144) und die seitlichen Lamellen (126, 146) jeweils in einer ersten Winkelrichtung relativ zu der axialen Richtung (L) des Reifens (1) erstrecken, wenn die Lauffläche (100) auf einen Reifen (1) aufgebracht ist, und sich vorzugsweise jeweils vollständig über die jeweilige Rippe (120, 140) hinweg erstrecken, wobei zwei der seitlichen Lamellen (126, 146) in Umfangsrichtung zwischen jedem Paar seitlicher Rillen (124, 144) angeordnet sind, wobei sich eine der zwei seitlichen Lamellen (126, 146) in eine erste Richtung erstreckt und, wenn sie sich entlang der ersten Richtung bewegt, einen ersten Breitenübergang auf eine zweite breitere Breite an oder angrenzend zu einem seitlichen Mittelpunkt der jeweiligen zweiten und vierten Rippe (120, 140) aufweist, wobei sich die andere der zwei seitlichen Lamellen (126, 146) in eine zweite Richtung erstreckt und, wenn sie sich entlang der zweiten Richtung bewegt, einen ersten Breitenübergang zu einer zweiten breiteren Breite an oder angrenzend zu einem seitlichen Mittelpunkt der jeweiligen zweiten und vierten Rippe (120, 140) aufweist, wobei die erste Richtung zu der zweiten Richtung entgegengesetzt ausgerichtet ist; **dadurch gekennzeichnet, dass** die erste Rippe (110) eine sekundäre Rille (117) beinhaltet, die sich in Umfangsrichtung vollständig um die erste Rippe (110) herum erstreckt, und/oder dass die fünfte Rippe (150) eine sekundäre Rille (157) beinhaltet, die sich in Umfangsrichtung vollständig um die fünfte Rippe (150) herum erstreckt.

2. Lauffläche nach Anspruch 1, wobei die dritte Rippe (130) seitliche Rillen (134) und seitliche Lamellen (136) beinhaltet, wobei sich die seitlichen Rillen (134) und die seitlichen Lamellen (136) jeweils in einer zweiten Winkelrichtung relativ zu der axialen Richtung (L) des Reifens (1) erstrecken, wenn die Lauffläche (100) auf einen Reifen (1) aufgebracht ist, und sich vorzugsweise jeweils vollständig über die dritte Rippe (130) hinweg erstrecken, wobei zwei der seitlichen Lamellen (136) in Umfangsrichtung zwischen jedem Paar seitlicher Rillen (134) angeordnet sind, wobei sich eine der zwei seitlichen Lamellen (136) in die erste Richtung erstreckt und, wenn sie sich entlang der ersten Richtung bewegt, einen ersten Breitenübergang zu einer zweiten breiteren Breite an oder angrenzend zu einem Mittelpunkt der dritten Rippe (130) aufweist, wobei sich die andere der zwei Seitenlamellen (136) in die zweite Richtung erstreckt und, wenn sie sich entlang der zweiten Richtung bewegt, einen ersten Breitenübergang zu einer zweiten breiteren Breite an oder angrenzend zu einem seitlichen Mittelpunkt der dritten Rippe (130) aufweist, wobei die erste Richtung gleich und entgegengesetzt der zweiten Richtung ist.

3. Lauffläche nach Anspruch 1, wobei die fünfte Rippe (150) eine tertiäre Rille (159) beinhaltet, die sich in Umfangsrichtung vollständig um die fünfte Rippe (150) herum erstreckt.

4. Lauffläche nach Anspruch 1, wobei die erste Rippe (110) keine andere Rille, die sich in Umfangsrichtung vollständig um die erste Rippe (110) herum erstreckt, als die sekundäre Rille (117) umfasst.

5. Lauffläche nach wenigstens einem der vorhergehenden Ansprüche, wobei die erste und die fünfte Rippe (110, 150) Schulterrippen sind, die dritte Rippe (130) eine Mittelrippe ist und die zweite und die vierte Rippe (120, 140) Zwischenrippen sind, die sich zwischen den Schulterrippen und der Mittelrippe befinden.

6. Lauffläche nach wenigstens einem der vorhergehenden Ansprüche, wobei die seitlichen Rillen (124, 144) in der zweiten und/oder der vierten Rippe (120, 140) eine radiale Tiefe in einem Bereich von 1,0 mm bis 4,0 mm aufweisen.

7. Lauffläche nach wenigstens einem der vorhergehenden Ansprüche, wobei die seitlichen Rillen (134) in der dritten Rippe (130) eine radiale Tiefe in einem Bereich von 1,0 mm bis 4,0 mm aufweisen.

8. Lauffläche nach wenigstens einem der vorhergehenden Ansprüche, wobei die seitlichen Lamellen (126, 146) in der zweiten und/oder der vierten Rippe (120, 140) eine radiale Tiefe in einem Bereich von 1,0 mm bis 3,0 mm aufweisen.

9. Lauffläche nach wenigstens einem der vorhergehenden Ansprüche, wobei die seitlichen Lamellen (136) in der dritten Rippe (130) eine radiale Tiefe in einem Bereich von 1,0 mm bis 3,0 mm aufweisen.

10. Lauffläche nach wenigstens einem der vorhergehenden Ansprüche, wobei die fünfte Rippe (150) und/oder die erste Rippe (110) wenigstens eine, vorzugsweise zwei, einendige Blindlamellen (116, 156) beinhaltet, die eine radiale Tiefe vorzugsweise in einem Bereich von 1,0 mm bis 3,0 mm aufweisen.

11. Lauffläche nach wenigstens einem der vorhergehenden Ansprüche, wobei die erste Rippe (110) und/oder die fünfte Rippe (150) seitliche Rillen (114, 154) beinhalten, die sich in einem ersten Winkel relativ zu der axialen Richtung (L) des Reifens (1) erstrecken, wenn die Lauffläche (100) auf einen Reifen (1) aufgebracht ist, und sich vorzugsweise vollständig über die jeweilige erste oder fünfte Rippe (110, 150) hinweg erstrecken.

12. Lauffläche nach Anspruch 11, wobei die erste Rippe (110) und/oder die fünfte Rippe (150) zwei Lamellen (116, 156) beinhaltet, die in Umfangsrichtung zwischen jedem Paar seitlicher Rillen (114, 154) angeordnet sind, wobei die zwei Lamellen (116, 156) sich vorzugsweise in dem ersten Winkel relativ zu der axialen Richtung (L) des Reifens (1) erstrecken, wenn die Lauffläche (100) auf einen Reifen (1) aufgebracht ist.

13. Lauffläche nach Anspruch 12, wobei die zwei Lamellen (116, 156) eine radiale Tiefe in einem Bereich von 1,0 mm bis 3,0 mm aufweisen und/oder einendige Blindlamellen sind.

14. Lauffläche nach wenigstens einem der vorhergehenden Ansprüche, wobei die zweite breitere Breite in der zweiten und der vierten Rippe (120, 140) wenigstens zweimal breiter als die erste Breite in der zweiten und der vierten Rippe (120, 140) ist und/oder wobei die zweite breitere Breite in der dritten Rippe (130) wenigstens zweimal breiter als die erste Breite in der dritten Rippe (130) ist.

15. Reifen, der eine Lauffläche nach wenigstens einem der vorhergehenden Ansprüche aufweist.

## Revendications

1. Bande de roulement destinée à un bandage pneumatique (1) la bande de roulement (100) comprenant :
une première rainure circonférentielle (10) qui s'étend dans une direction circonférentielle (C) du bandage pneumatique (1) lorsque la bande de roulement (100) a été appliquée sur un bandage pneumatique (1) ;
une deuxième rainure circonférentielle (20) qui s'étend dans la direction circonférentielle (C) du bandage pneumatique (1) lorsque la bande de roulement (100) a été appliquée sur un bandage pneumatique (1) ;
une troisième rainure circonférentielle (30) qui s'étend dans la direction circonférentielle (C) du bandage pneumatique (1) lorsque la bande de roulement (100) a été appliquée sur un bandage pneumatique (1) ; et
une quatrième rainure circonférentielle (40) qui s'étend dans la direction circonférentielle (C) du bandage pneumatique (1) lorsque la bande de roulement (100) a été appliquée sur un bandage pneumatique (1), la première, la deuxième, la troisième et la quatrième rainure circonférentielle (10, 20, 30, 40) définissant une première, une deuxième, une troisième, une quatrième et une cinquième nervure (110, 120, 130, 140, 150) ;
la deuxième et la quatrième nervure (120, 140) englobant des rainures latérales (124, 144) et des lamelles latérales (126, 146), les rainures latérales (124, 144) et les lamelles latérales (126, 146) s'étendant chacune dans une première direction angulaire par rapport à la direction axiale (L) du bandage pneumatique (1) lorsque la bande de roulement (100) a été appliquée sur un bandage pneumatique (1), et de préférence s'étendant chacune complètement à travers la nervure respective (120, 140) ; dans laquelle deux desdites lamelles latérales (126, 146) sont disposées dans la direction circonférentielle entre chaque paire de rainures latérales (124, 144), une des deux lamelles latérales (126, 146) s'étendant dans une première direction et, lors d'un déplacement dans la première direction, possédant une première largeur qui se transforme en une deuxième largeur supérieure à un point central latéral de la deuxième et de la quatrième nervure respective (120, 140) ou en position adjacente au point en question, l'autre lamelle parmi les deux lamelles latérales (126, 146) s'étendant dans une deuxième direction et, lors d'un déplacement dans la deuxième direction, possédant une première largeur qui se transforme en une deuxième largeur supérieure à un point central latéral de la deuxième et de la quatrième nervure respective (120, 140) ou en position adjacente au point en question, la première direction étant orientée à l'opposé de la deuxième direction ; **caractérisée en ce que** la première nervure (110) englobe une rainure secondaire (117) qui s'étend dans la direction circonférentielle, complètement autour de la première nervure (110) et/ou **en ce que** la cinquième nervure (150) englobe une rainure secondaire (157) qui s'étend dans la direction circonférentielle, complètement autour de la cinquième nervure (150).

2. Bande de roulement telle qu'indiquée dans la revendication 1, dans laquelle la troisième nervure (130) englobe des rainures latérales (134) et des lamelles latérales (136), les rainures latérales (134) et les lamelles latérales (136) s'étendant chacune dans une deuxième direction angulaire par rapport à la direction axiale (L) du bandage pneumatique (1) lorsque la bande de roulement (100) a été appliquée sur un bandage pneumatique (1), et de préférence s'étendant chacune complètement à travers la troisième nervure (130); dans laquelle deux desdites lamelles latérales (136) sont disposées dans la direction circonférentielle entre chaque paire de rainures latérales (134), une des deux lamelles latérales (136) s'étendant dans une première direction et, lors d'un déplacement dans la première direction, possédant une première largeur qui se transforme en une deuxième largeur supérieure à un point central latéral de la troisième nervure (130) ou en position adjacente au point en question, l'autre lamelle parmi les deux lamelles latérales (136) s'étendant dans la deuxième direction et, lors d'un déplacement dans la deuxième direction, possédant une première largeur qui se transforme en une deuxième largeur supérieure à un point central latéral de la troisième nervure respective (130) ou en position adjacente au point en question, la première direction étant orientée à l'opposé de la deuxième direction.

3. Bande de roulement telle qu'indiquée dans la revendication 1, dans laquelle la cinquième nervure (150) englobe une rainure tertiaire (159) qui s'étend dans la direction circonférentielle complètement autour de la cinquième nervure (150).

4. Bande de roulement telle qu'indiquée dans la revendication 1, dans laquelle la première nervure (110) ne comprend aucune rainure qui s'étend dans la direction circonférentielle complètement autour de la première nervure (110) autre que ladite rainure secondaire (117).

5. Bande de roulement telle qu'indiquée dans au moins une des revendications précédentes, dans laquelle la première et la cinquième nervure (110, 150) représentent des nervures d'épaulement, la troisième nervure (130) représente une nervure centrale et la deuxième et la quatrième nervure (120, 140) représentent des nervures intermédiaires qui sont disposées entre les nervures d'épaulement et la nervure centrale.

6. Bande de roulement telle qu'indiquée dans au moins une des revendications précédentes, dans laquelle les rainures latérales (124, 144), dans la deuxième et/ou la quatrième nervure (120, 140) possèdent une profondeur radiale qui se situe dans une plage allant de 1,0 mm à 4,0 mm.

7. Bande de roulement telle qu'indiquée dans au moins une des revendications précédentes, dans laquelle les rainures latérales (134), dans la troisième nervure (130) possèdent une profondeur radiale qui se situe dans une plage allant de 1,0 mm à 4,0 mm.

8. Bande de roulement telle qu'indiquée dans au moins une des revendications précédentes, dans laquelle les lamelles latérales (126, 146), dans la deuxième et/ou la quatrième nervure (120, 140) possèdent une profondeur radiale qui se situe dans une plage allant de 1,0 mm à 3,0 mm.

9. Bande de roulement telle qu'indiquée dans au moins une des revendications précédentes, dans laquelle les lamelles latérales (136), dans la troisième nervure (130) possèdent une profondeur radiale qui se situe dans une plage allant de 1,0 mm à 3,0 mm.

10. Bande de roulement telle qu'indiquée dans au moins une des revendications précédentes, dans laquelle la cinquième nervure (150) et/ou la première nervure (110) englobe(nt) au moins une, de préférence deux lamelles terminales borgnes (116, 156) qui possèdent une profondeur radiale qui se situe dans une plage allant de 1,0 mm à 3,0 mm.

11. Bande de roulement telle qu'indiquée dans au moins une des revendications précédentes, dans laquelle la première nervure (110) et/ou la cinquième nervure (150) englobe(nt) des rainures latérales (114, 154) qui s'étendent en formant un premier angle par rapport à la direction axiale (L) du bandage pneumatique (1) lorsque la bande de roulement (100) a été appliquée sur un bandage pneumatique (1), et qui s'étende(nt) de préférence complètement à travers la première ou la cinquième nervure respective (110, 150).

12. Bande de roulement telle qu'indiquée dans la la revendication 11, dans laquelle la première nervure (110) et/ou la cinquième nervure (150) englobe(nt) deux lamelles (116, 156) qui sont disposées dans la direction circonférentielle entre chaque paire de rainures latérales (114, 154), lesdites deux lamelles (116, 156) s'étendant de préférence en formant ledit premier angle par rapport à la direction axiale (L) du bandage pneumatique (1) lorsque la bande de roulement (100) a été appliquée sur un bandage pneumatique (1).

13. Bande de roulement telle qu'indiquée dans la la revendication 12, dans laquelle lesdites deux lamelles (116, 156) possèdent une profondeur radiale qui se situe dans une plage allant de 1,0 mm à 3,0 mm et/ou représentent des lamelles terminales borgnes.

14. Bande de roulement telle qu'indiquée dans au moins une des revendications précédentes, dans laquelle la deuxième largeur supérieure dans la deuxième et la quatrième nervure (120, 140) représente une largeur au moins deux fois supérieure à la première largeur dans la deuxième et la quatrième nervure (120, 140), et/ou dans laquelle la deuxième largeur supérieure dans la troisième nervure (130) représente une largeur au moins deux fois supérieure à la première largeur dans la troisième nervure (130).

15. Bandage pneumatique qui possède une bande de roulement en conformité avec au moins une des revendications précédentes.
